# EUROPÄISCHE PATENTANMELDUNG

(11) **EP 4 488 046 A1**
(43) Veröffentlichungstag der Anmeldung: **08.01.2025**
(21) Anmeldenummer: 23183015.9
(22) Anmeldetag: 03.07.2023
(51) Int. Cl.: B30B 9/30, B23K 9/04, B30B 9/32, C23C 4/01, C23C 4/131

(54) **VERSCHLEISSPLATTENVORRICHTUNG UND VERFAHREN ZUR HERSTELLUNG**

(71) Anmelder: Berkenhoff GmbH, 45711 Datteln (DE)
(72) Erfinder: BERKENHOFF, Andreas, 45711 Datteln (DE)
(74) Vertreter: Schäperklaus, Jochen

(57) **Zusammenfassung**

Die Erfindung betrifft eine Verschleißplattenvorrichtung (100), für eine Recyclinganlage, wie eine Schrottpresse oder eine Schrottschere, umfassend eine Trägereinheit (1) aus einem Metall und einer Mehrzahl an stoffschlüssig mit der Trägereinheit (1) verbundenen Profilelementen (2) aus einem Hartmetall. Eine Kontur (8) der Profilelemente (2) wird jeweils durch eine Mehrzahl an übereinanderliegenden und fest miteinander verbundenen Materialschichten (3) gebildet. Weiter betrifft die Erfindung ein Verfahren zur Herstellung einer Verschleißplattenvorrichtung (100), bei dem eine Trägereinheit (1) bereitgestellt wird und wobei auf die Trägereinheit (1) eine Mehrzahl an Materialschichten (3) aufbauend auf eine Grundfläche (1a) der Trägereinheit (1) aufgetragen werden und wobei jede weitere Materialschicht (3) wenigstens bereichsweise auf eine zuvor aufgetragene Materialschicht (3) aufgetragen wird. Wenigstens ein Teil der Materialschichten (3) weisen wenigstens bereichsweise wenigstens eine Unterbrechung (7) auf, um wenigstens einen Abschnitt einer Kontur (8) eines Profilelements (2) zu bilden.

## Beschreibung

Die vorliegende Erfindung betrifft eine Verschleißplattenvorrichtung für eine Recyclinganlage, wie eine Schrottpresse oder eine Schrottschere, mit einer Trägereinheit und einer Mehrzahl an Profilelementen und ein Verfahren zur Herstellung einer solchen Verschleißplattenvorrichtung.

Recyclinganalgen für Schrott umfassen oft Paketierpressen, wie Schrottpressen, oder auch Schrottscheren.

In Pakteierpressen wird üblicherweise der Schrott in drei Pressschritten zu einem quader- oder würfelförmigen Paket gepresst. Dazu wird, nachdem der Schrott in einen Aufnahmeraum der Presse eingefüllt wurde, ein Vorverdichter meist horizontal verschoben. Der Vorverdichter weist eine einteilige oder mehrteilige Druckplatte auf, die gegen den Schrott drückt. Dann erfolgt eine Zwischenverdichtung, bei der ein Zwischenverdichter meist senkrecht von oben nach unten verschoben wird, so dass sich ein länglicher Schrottquader ergibt. Auch der Zwischenverdichter weist eine ein- oder mehrteilige Druckplatte auf. Im letzten Schritt, der sogenannten Endverdichtung, wird der längliche Schrottquader meist horizontal und senkrecht zu den bisherigen Verdichtungsrichtungen zu einem Paket gepresst. Der dazu verwendete Endverdichter weist ebenfalls eine ein- oder mehrteilige Druckplatte auf. Der Endverdichter wird dann zumeist auch noch als Auswerfer verwendet, um das Schrottpaket aus dem Aufnahmeraum zu entfernen.

In Paketierpressen werden für eine innere Auskleidung des Raumes, in welchen der zu pressende Schrott aufgenommen wird, so genannte Verschleißplatten eingesetzt. Diese Verschleißplatten sind im Betrieb der Presse einer besonderen mechanischen Beanspruchung ausgesetzt und nutzen sich im Vergleich zu anderen Komponenten der Presse schnell ab. Die Verschleißplatten werden daher regelmäßig ausgetauscht. Das gleiche gilt für die Druckplatten.

Häufig sind die Verschleißplatten mit einem Rillenprofil versehen. Das Rillenprofil kann durch im Querschnitt trapezförmige, dreieckige oder andere parallele Rillen gebildet werden. Auch Wellenprofile sind möglich. Diese Profilierung der Verschleißplatten macht es möglich, dass ein Pressstempel, der mit einem entsprechenden Profil versehene Flächen hat, in die Rillen der Verschleißplatten geführt wird.

Neben den Verschleißplatten, welche den mit dem zu pressenden Schrott zu befüllenden Raum von innen auskleiden, sind - wie bereits angemerkt - auch die Druckplatten einer Paketierpresse einem erhöhten Verschleiß ausgesetzt. Die Druckplatten sind die Platten, die zum Pressen des Schrottes mit meist hydraulischen Stempeln bewegt werden. Die Druckplatten haben eine erste Fläche, die gegen den Schrott gepresst wird. Dazu im Wesentlichen senkrecht hat eine Druckplatte in der Regel drei oder vier Seitenflächen, die gezahnt sind. Die Zahnung entspricht dem Rillenprofil der den Raum auskleidenden Platten. Die Zahnung der Druckplatten kann dadurch im Wesentlichen formschlüssig in die Rillen der Auskleidungsbleche eingreifen. Dadurch ist es möglich, dass die Druckplatten senkrecht zu den Auskleidungsplatten ausgerichtet entlang der Rillen verschoben werden, um den Schrott zu pressen. Je nachdem, ob es sich um Druckplatten für einen Vorverdichter, Zwischenverdichter oder Endverdichter handelt, sind die Oberflächen, die gegen den Schrott gepresst werden, auch mit einem Rillenprofil versehen. Während die Druckplatten des Vorverdichters ein oder zwei unterschiedlich ausgerichtete Rillenprofile haben können, haben die Druckplatten der Zwischenverdichter ein Rillenprofil und die Druckplatten der Endverdichter kein Rillenprofil. Die Druckplatten der Vordichter und Zwischenverdichter haben Rillenprofile, weil beim Zwischenverdichten bzw. Endverdichten die Druckplatten der Zwischenverdichter bzw. Endverdichter führen.

Um hohe Standzeiten dieser Verschleißplatten zu ermöglichen, sind diese aus Metallen mit hohen Härtegraden hergestellt. Üblich sind beispielsweise Härtegrade (HBW) von 400 bis 500 Härte nach Vickers (HV). Bekannte Platten oder Bleche mit diesen Härtegraden sind beispielsweise Hardox 400, 450 oder 500 Bleche oder Platten.

Auch in Schrottscheren werden solche Druckplatten oder Verschleißplatten eingesetzt. Nachstehend wird ausschließlich der Begriff Verschleißplatte beziehungsweise Verschleißplatteneinheit für Verschleißplatten und Druckplatten genutzt.

Zur Herstellung des Profils solcher Verschleißplatten sind aus dem Stand der Technik verschiedene Verfahren bekannt geworden.

Oft werden diese harte Platten auf einer Bettfräsmaschine bearbeitet, um das Profil aus dem Vollen zu fräsen. Das Fräsen der harten Bleche macht noch härtere Fräswerkzeuge notwendig, die im Vergleich zu Werkzeugen zur Bearbeitung von weicheren Werkstücken teuer sind. Außerdem ist das Fräsen der harten Bleche sehr zeitaufwendig. Weiter kann eine Wärmebehandlung erforderlich sein, um die erforderliche Oberflächenhärte nach dem Fräsen zu gewährleisten. Dadurch sind diese mit Platten sehr teuer und weisen gleichzeitig nur kurze Standzeiten auf. Darüber hinaus fällt durch die spangebenede Bearbeitung aus dem Vollen ein erheblicher Anteil an Spänen und Schrott an, welcher direkt der Wiederverwertung zugeführt werden muss. Dadurch ist dieses Herstellungsverfahren auch besonders kostenintensiv.

Darüber hinaus ist aus der EP3 053 678 A1 ein Verschleißblech für Paketierpressen bekannt geworden, welches einen Träger aus einem ersten Metall und einem auf den Träger durch ein generatives Fertigungsverfahren aufgetragene und mit diesem fest verbundene äußere Schicht aus einem Hartmetall aufweist. Für die Herstellung der äußeren Schicht wird ein pulverförmiger Werkstoff durch einen Laser aufgeschmolzen, sodass dieser sich mit dem Träger verbindet. Gerade bei großen Bauteilen werden durch die geringe und lokal begrenzte Wärmeeinfuhr des Lasers auch lokal begrenzte Eigenspannungen in der Verschleißplatte hervorgerufen. Diese Eigenspannungen führen insbesondere zu Mikrorissen im Material. Durch die dynamische Belastung in der Paketierpresse ist eine Lebensdauer entsprechend gering, sodass ein solches Verschleißblech bereits nach kurzer Zeit wieder ausgetauscht werden muss.

Es ist daher die Aufgabe der vorliegenden Erfindung, eine Verschleißplattenvorrichtung für eine Recyclinganlage, wie eine Schrottpresse oder eine Schrottschere zur Verfügung zu stellen, welche kostengünstiger herstellbar ist, und die insbesondere eine lange Lebensdauer aufweist.

Die Aufgabe wird durch eine Verschleißplattenvorrichtung mit den Merkmalen nach Anspruch 1 und durch ein Verfahren zur Herstellung einer Verschleißplattenvorrichtung mit den Merkmalen nach Anspruch 6 gelöst. Vorteilhafte Weiterbildungen sind Gegenstand der Unteransprüche sowie der allgemeinen Beschreibung und der Beschreibung des Ausführungsbeispiels.

Die erfindungsgemäße Verschleißplattenvorrichtung, für eine Recyclinganlage, wie eine Schrottpresse oder eine Schrottschere umfasst eine Trägereinheit aus einem Metall oder einer Metalllegierung und einer Mehrzahl an stoffschlüssig mit der Trägereinheit verbundenen Profilelementen, z. B. zur Führung eines Stempels der Schrottpresse, aus einem anderen Metall oder einer Metalllegierung, insbesondere einem Hartmetall. Die Profilelemente werden jeweils durch eine Mehrzahl an übereinanderliegenden und stoffschlüssig miteinander verbundenen Materialschichten gebildet.

Die Erfindung hat viele Vorteile. Ein erheblicher Vorteil der Erfindung ist, dass die Profilelemente durch eine Mehrzahl an übereinanderliegenden und stoffschlüssig und fest miteinander verbundenen Materialschichten gebildet werden. Die einzelnen Materialschichten können dabei kostengünstig und schnell nacheinander auf die Trägereinheit aufgebracht werden. Durch den schichtweisen Aufbau ist eine nahezu beliebige Formgebung möglich. Weiter kann eine Kontur des Profilselements besonders genau gefertigt werden, sodass eine gegebenenfalls notwendige spanende Nachbearbeitung auf ein Minimum reduziert werden kann. Weiter können andere Fertigungsverfahren als die im Stand der Technik bekannten Verfahren zur Herstellung des mehrschichtigen Aufbaus genutzt werden, sodass eine kostengünstige und schnelle Fertigung, auch von Bauteilen mit großen Abmessungen, möglich ist.

Vorzugsweise umfasst die Verschleißplattenvorrichtung eine Vielzahl an Profilelementen. Insbesondere erstrecken sich die Profilelemente parallel zueinander entlang einer Längsrichtung der Trägereinheit. Insbesondere bilden die Profilelemente ein Rillenprofil.

Insbesondere nimmt eine Breite einer Kontur des Profilelements mit steigendem Abstand von einer Grundfläche der Trägereinheit ab. Vorzugsweise weist das Profilelement eine Wellenkontur, eine Trapezkontur, eine Dreieckskontur, eine Kegelkontur oder ein Kontur mit einem sinusförmigen Verlauf auf. Weiter sind auch andere Konturen möglich.

Bevorzugt wird die Materialschicht durch wenigstens eine Schweißraupenstruktur mit wenigstens einer Schweißraupe gebildet. Vorteilhaft sind Schweißraupen durch Auftragsschweißen kostengünstig herstellbar und/oder aufbringbar. Weiter vorteilhaft können Schweißraupen eine besonders harte und somit verschleißfeste Schicht bilden, sodass eine lange Lebensdauer erreichbar ist. Insbesondere wird die Materialschicht durch eine oder eine Mehrzahl an Schweißraupenstrukturen gebildet, welche im Wesentlichen in einer Ebene liegen. Zweckmäßig können sich wenigstens Abschnitte von Schweißraupenstrukturen innerhalb einer Ebene wenigstens teilweise berühren oder überlappen, um eine Materialschicht zu bilden. Insbesondere liegen die Schweißraupenstrukturen in verschiedenen Materialschichten lagenweise übereinander.

Vorzugsweise weisen die Schweißraupenstrukturen unterschiedliche Breiten auf. Vorzugsweise sind die Breiten wenigstens zweier, insbesondere übereinanderliegender oder vorzugsweise benachbarter Schweißraupenstrukturen unterschiedlich zueinander. Vorteilhaft kann durch die Variation der Breite eine Kontur des Profilelements bestimmt werden. Weiter ist es vorteilhaft möglich, die Breite einer Schweißraupenstruktur so auszulegen, dass eine Schweißraupenstruktur einer nachfolgenden Materialschicht sich über eine Nahtstelle zwischen zwei Schweißraupenstrukturen einer darunterliegenden Materialschicht erstreckt. Vorteilhaft wird dadurch ein Halt zwischen den einzelnen Materialschichten verbessert.

Insbesondere ist eine Höhe wenigstens zweier, insbesondere benachbarter oder übereinanderliegender, Materialschichten oder Schweißraupenstrukturen unterschiedlich zueinander. Vorteilhaft kann dadurch eine gewünschte Kontur des Profilelements mit geformt werden.

Bevorzugt weist die Materialschicht eine Härte von wenigstens 400 HV auf. Vorzugsweise weisen die Materialschichten Härten von bis 500 HV oder sogar bis zu 600 HV auf, wobei HV für die Härte nach dem Verfahren nach Vickers darstellt. Vorteilhaft sind solche Materialschichten besonders hart, jedoch noch spangebend bearbeitbar. Die Härteprüfung nach Vickers (HV) erfolgt hierbei insbesondere nach der DIN EN ISO 6507. Der pyramidenförmige Eindringkörper mit einem Flächenwinkel von vorzugsweise 136 ° wird dabei insbesondere mit einer definierten Prüflast von 10 kgf (≙ HV10) in einen zu prüfenden Körper eingedrückt. Die Zeit vom Beginn des Aufbringens der Prüfkraft von 98,07 N (≙ 10 kgf in N) bis zum Erreichen des vorgegeben Wertes beträgt insbesondere 7 s. Die Einwirkdauer der Prüfkraft beträgt eine Sollzeit von vorzugsweise 14 s. Die Prüfeindrücke werden insbesondere mit einem Abstand von 2,5d (d = Diagonale) von der Werkstückkante und 3d zwischen den Eindrücken platziert.

Zweckmäßig ist zwischen der Trägereinheit und den Profilelementen wenigstens eine Grundschicht vorhanden. Eine Grundschicht wird durch eine Materialschicht gebildet, welche sich im Wesentlichen über eine gesamte Grundfläche der Trägereinheit erstreckt. Vorteilhaft muss in diesem Fall die Trägereinheit keine hohe Härte aufweisen, da die Trägereinheit nicht direkt in Kontakt mit Schrott kommt. Insbesondere sind mehrere übereinanderliegende Grundschichten vorhanden. Vorzugsweise bedeckt eine Grundschicht wenigstens 75 % oder 85 % oder 95 % oder 98 % oder sogar bis zu 100 % der Grundfläche der Trägereinheit, auf welche die Materialschichten wenigstens teilweise aufgetragen werden.

Insbesondere ist die Trägereinheit aus einem Metall oder einer Metalllegierung ausgebildet, welche eine geringere Härte aufweist als die aufgetragenen Materialschichten. Insbesondere ist die Trägereinheit aus einem Baustahl oder einer Baustahllegierung gebildet. Vorzugsweise ist die Trägereinheit als wenigstens ein Blech ausgebildet. Vorteilhaft sind solche Metalle gut schweißbar, sodass eine besonders feste und stoffschlüssige Verbindung erzielbar ist. Vorteilhaft ist Baustahl besonders günstig, vorteilhaft in der Handhabung und weist eine hohe Verfügbarkeit auf.

sieben Materialschichten auf. Hierbei sind insbesondere drei Materialschichten als Grundschichten ausgebildet. Zweckmäßig bilden vier Materialschichten die Profilelemente und deren Konturen. Vorteilhaft hat sich durch Experimente herausgestellt, dass die Verschleißplattenvorrichtung dadurch eine harte verschleißarme Oberfläche mit den erforderlichen geometrischen Abmessungen aufweist, welche gleichzeitig wirtschaftlich und schnell fertigbar ist.

Weitere vorteilhafte Weiterbildungen der Verschleißplattenvorrichtung ergeben sich aus der gesamten Anmeldung.

Eine Schrottpresse oder eine Schrottschere umfasst insbesondere wenigstens eine zur beschriebene

Verschleißplattenvorrichtung. Vorteilhafte Weiterbildungen der Schrottpressen und der Schrottschere ergeben sich aus der gesamten Anmeldung.

Das erfindungsgemäße Verfahren zur Herstellung einer zuvor beschriebenen Verschleißplattenvorrichtung umfasst wenigstens die nachstehenden Verfahrensschritte:
- Bereitstellen einer Trägereinheit; Auftragen einer Mehrzahl an Materialschichten aufbauend auf eine Grundfläche der Trägereinheit;
- wobei jede weitere Materialschicht wenigstens bereichsweise oder teilweise auf eine zuvor aufgetragene Materialschicht aufgetragen wird; und wobei die Materialschicht eine feste und stoffschlüssige Verbindung mit der Trägereinheit oder wenigstens einer zuvor aufgetragenen Materialschicht eingeht;
- wobei wenigstens ein Teil der aufgetragenen Materialschichten wenigstens bereichsweise wenigstens eine Unterbrechung aufweisen, um wenigstens einen Abschnitt einer Kontur wenigstens eines Profilelements zu bilden.

Das erfindungsgemäße Verfahren hat viele Vorteile. Ein erheblicher Vorteil des Verfahrens ist, dass die Profilelemente und deren Kontur durch schichtweises Auftragen mehrerer Materialschichten hergestellt werden. Dadurch können Fertigungsverfahren eingesetzt werden, welche deutlich kosteneffizienter sind als die im Stand der Technik bekannten Verfahren. Weiter kann eine höhere Härte im Gefüge der einzelnen Materialschichten als im Stand der Technik bekannt erzielt werden. Insgesamt ist eine lange Lebensdauer erzielbar

Insbesondere ist eine Unterbrechung in einer Materialschicht im Sinne dieser Anmeldung ein Bereich, welcher innerhalb der Ränder der Grundfläche der Trägereinheit liegt und welcher nicht von der Materialschicht bedeckt ist, und wobei die Unterbrechung innerhalb einer Ebene einer Materialschicht seitlich von wenigstens zwei Schweißraupenstrukturen berandet ist.

Bevorzugt werden die einzelnen Materialschichten durch Auftragsschweißen, insbesondere mittels eines Schweißbrenners, hergestellt. Auftragsschweißen ist ein günstiges Fertigungsverfahren, mit dem eine oder mehrere, insbesondere harte und metallische Materialschichten auf die Trägereinheit und aufeinander aufgebracht werden können. Vorteilhaft ist eine Fertigung der Profilelemente und deren Kontur durch Auftragsschweißen deutlich kostengünstiger als eine spangebende Bearbeitung aus einem Vollmaterial. Insbesondere kann eine Maßhaltigkeit so genau sein, dass eine spangebende Nachbearbeitung auf ein Minimum reduziert werden kann oder sogar vollständig darauf verzichtet werden kann.

Besonders bevorzugt wird ein Schweißmaterial aus einem Hartmetall verwendet. Insbesondere wird ein Schweißmaterial aus einer Sonderlegierung genutzt, welche bevorzugt im Wesentlichen dem Werkstoff S Z Fe3 gemäß DIN EN 14700 entspricht. Vorzugsweise wird ein Schweißmaterial verwendet, welches insbesondere als Drahtelektrode bereitgestellt wird, welche unter der Handelsbezeichnung UTP A 73 G 3 (utp maintenance von Voestalpine) geführt wird. Die resultierende Schweißraupenstruktur hat eine besonders hohe Oberflächenhärte. Vorteilhaft entsteht hier bereits durch Abkühlen an der Luft ein martensitisches Gefüge innerhalb des Schweißraupenstruktur, sodass keine Wärmenachbehandlung notwendig ist.

Zweckmäßig wird ein Metall-Schutz-Gas Schweißverfahren zur Herstellung der Materialschicht genutzt. Tests haben gezeigt, dass dieses Verfahren besonders effektiv ist, um die Materialschicht aufzutragen. Hierbei hat sich erstaunlicherweise gezeigt, dass durch ein handelsübliches aktives Mischgas mit 82 % Argon und 18 % Kohlenstoffdioxid gute Schweißergebnisse erzielbar sind. Weiter ist das Mischgas kostengünstig und weist eine hohe Verfügbarkeit auf. Bei dem bevorzugt genutzten Metall-Schutz-Gas Schweißverfahren wird ein energieinduzierter Lichtbogen mit einer drahtförmigen Elektrode, insbesondere einer Drahtelektrode, genutzt, welche abbrennt und kontinuierlich nachgefördert wird. Eine Wärmeeinflusszone beim Auftragen jeder Materialschicht ist bei diesem Schweißverfahren groß genug, dass auch Materialspannungen zwischen den Materialschichten und insbesondere am Übergang zur Trägereinheit minimiert werden oder bevorzugt gar nicht auftreten. Gleichzeitig kann die Wärmeeinflusszone insbesondere so eingestellt werden, dass ein Härteverlust der einzelnen Materialschichten im Wesentlichen verhindert werden kann. Vorteilhaft können lokale Eigenspannungen und daraus resultierende Risse dadurch vermieden werden.

Zweckmäßig wird beim Auftragsschweißen ein Schweißbrenner, vorzugsweise eines Schweißgeräts, insbesondere durch eine automatisierte Handhabungsvorrichtung, wie einen Gelenkarmroboter, entlang wenigstens eines vorbestimmten Schweißpfads, bewegt, um wenigstens einen Teil einer Materialschicht herzustellen. Vorteilhaft ist durch den Einsatz einer automatisierten Handhabungsvorrichtung eine sehr genaue und gleichbleibende Fertigungsqualität möglich.

Vorteilhaft wird beim Schweißen ein Schweißkopf eines Schweißbrenners in einem vorgegebenen Kontaktrohrabstand über die Grundfläche oder die vorher aufgetragene Materialschicht bewegt, um ein Materialschicht mit gleichbleibenden Materialeigenschaften herzustellen.

Schweißpfade einzelner Materialschichten können dabei so ausgelegt sein, dass Start- und Endpunkte von übereinanderliegenden Materialschichten unterschiedlich sind, um einen strukturellen Zusammenhalt der einzelnen Materialschichten untereinander zu fördern und um insbesondere eine Gefügestruktur positiv zu beeinflussen. Weiter vorteilhaft kann dadurch ein besonders schneller Fertigungsprozess erzielt werden, wenn ein Startpunkt eines Schweißpfads einer nachfolgenden Materialschicht in einem Bereich auf der vorhergehenden Materialschicht liegt, in welchem das Gefüge bereits vollständig erstarrt ist. Vorteilhaft können Abkühlzeiten vor einer Fertigung einer neuen Materialschicht dadurch minimiert werden oder auf solche Abkühlzeiten kann vollständig verzichtet werden.

Insbesondere erfolgt eine Planung des Schweißpfads computergestützt. Vorzugsweise kann der Schweißpfad hierbei durch ein Computerprogramm anhand von CAD-Daten, wie einer Step-Datei, abgeleitet werden. Vorteilhaft ist hierdurch eine präzise Steuerung der Handhabungsvorrichtung möglich.

Zweckmäßig wird wenigstens eine Schweißraupenstruktur, welche insbesondere einen Teil des Profilelements bildet, durch einen Schweißpfad gebildet, welcher wenigstens eine Linearbewegung umfasst. Vorzugsweise wird der Linearbewegung wenigstens eine, insbesondere wenigstens abschnittsweise periodische, Pendelbewegung überlagert. Vorteilhaft können eine Amplitude der Pendelbewegung und eine Länge und ein Öffnungswinkel eines sich wiederholenden Musters zur Beschreibung genutzt werden, um eine Schweißraupenstruktur mit vorbestimmter Breite zu fertigen. Vorteilhaft sind dadurch auch die Bereiche mit Unterbrechungen in den Materialschichten mit bestimmten Abmessungen mit hoher Genauigkeit fertigbar.

Vorzugsweise bildet wenigstens eine Materialschicht eine Grundschicht, welche sich im Wesentlichen vollständig über eine Grundfläche der Trägereinheit erstreckt. Vorteilhaft kann hierdurch eine flächig deckende Materialschicht mit gleichmäßiger Höhe hergestellt werden. Insbesondere erstreckt sich der Schweißpfad zur Herstellung der Grundschicht bahnförmig im Wesentlichen über die gesamte Grundfläche der Trägereinheit. Vorzugsweise wird dabei zunächst der Bereich der Grundfläche der Trägereinheit mit einem Schweißraupenelement umrandet und anschießend durch bahnförmige Bewegungen ausgefüllt. Bahnförmig im Sinne dieser Anmeldung meint insbesondere, dass der Schweißpfad sich im Wesentlichen kontinuierlich entlang parallel verlaufender linearer Bahnen erstreckt, d. h. im Wesentlichen parallel verlaufende Linearbewegungen umfasst.

Insbesondere entspricht ein Versatz des Schweißbrenners zur Erzeugung einer Schweißraupenstruktur mit wenigstens einer bereichsweise durchgehenden Materialschicht zwischen 50 % und 100 % einer Breite der erstarrten Schweißraupenstruktur, welche auch durch eine einzelne Schweißraupe gebildet werden kann. Die Breite der erstarrten Schweißraupenstruktur ist insbesondere als Erfahrungswert auf Grundlage experimenteller Untersuchungen in Abhängigkeit des Schweißverfahrens, des Schweißmaterials und der gewählten Schweißparameter ermittelbar. Insbesondere hat sich experimentell gezeigt, dass dadurch eine besonders gleichmäßige und glatte Oberfläche einer Materialschicht fertigbar ist.

Bevorzugt wird die Trägereinheit vor dem Auftragen der Materialschichten, und insbesondere vor dem Auftragsschweißen, auf eine Temperatur zwischen 100° C und 500 °C und insbesondere auf ca. 250°C vorgewärmt. Vorteilhaft resultieren hieraus weniger Eigenspannungen in der gesamten Verschleißplattenvorrichtung bei oder nach dem Auftragsschweißen. Zudem resultiert eine genauere Maßhaltigkeit der fertigen Verschleißplattenvorrichtung.

Zweckmäßig werden die Profilelemente nach dem Auftragen der Materialschichten, und insbesondere nach dem Abschluss des Auftragsschweißens spangebend nachbearbeitet. Vorteilhaft wird hierdurch eine noch genauer Maßhaltigkeit der Konturen der Profilelemente erreicht. Dies ist insbesondere dann von Vorteil, wenn die Profilelemente auch als Führung für einen Pressenstempel dienen sollen.

Weitere vorteilhafte Weiterbildungen des Verfahrens ergeben sich aus der gesamten Anmeldung.

Weitere Merkmale und Vorteile des Ausführungsbeispiels der Erfindung werden unter Bezugnahme auf die Zeichnungen nachfolgend beschrieben. Dabei werden für gleiche oder ähnliche Teile und für Teile mit gleichen oder ähnlichen Funktionen dieselben Bezugszeichen verwendet. Es zeigen:
- Fig. 1: eine schematische perspektivische Ansicht einer erfindungsgemäßen Verschleißplattenvorrichtung;
- Fig. 2: eine schematische Schnittansicht der Verschleißplattenvorrichtung nach dem Auftragsschweißen;
- Fig. 3: schematische Skizzen von Schweißpfaden zur Herstellung der einzelnen Materialschichten der Verschleißplattenvorrichtung;
- Fig. 4: eine schematische Detailansicht der Herstellung einer Grundschicht der Verschleißplattenvorrichtung mit mehreren Schweißraupenstrukturen; und
- Fig. 5: eine schematische Detailskizze eines Schweißpfads zur Fertigung einer Schweißraupenstruktur mit einer variablen Breite, welche einen Teil der Kontur eines Profilelements der Verschleißplattenvorrichtung bildet.

Es ist nicht notwendig, dass eine erfindungsgemäße Vorrichtung alle nachfolgend beschriebenen Merkmale aufweist. Es ist auch möglich, dass eine erfindungsgemäße Vorrichtung nur einzelne Merkmale des nachfolgend beschriebenen Ausführungsbeispiels aufweist.

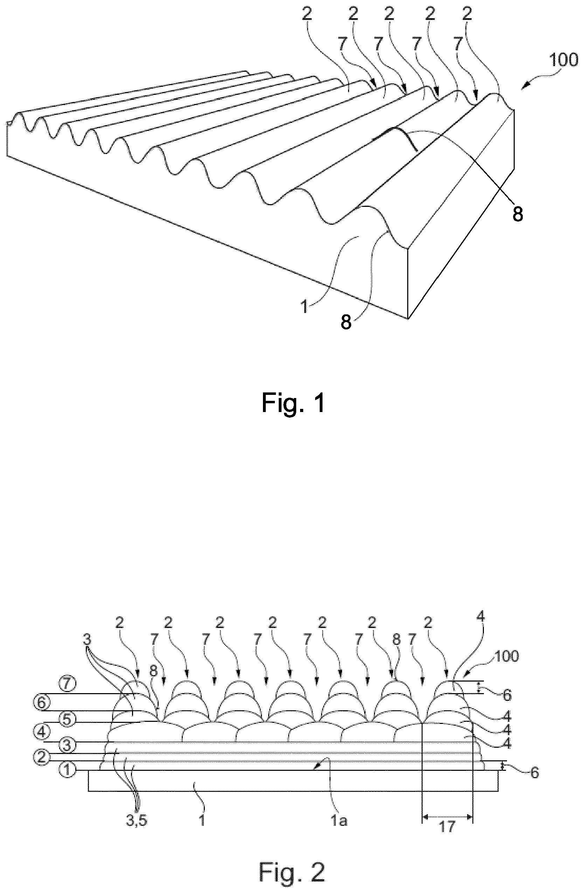

Fig. 1 zeigt eine schematische perspektivische Ansicht einer erfindungsgemäßen Verschleißplattenvorrichtung 100. Die Verschleißplattenvorrichtung 100 umfasst eine Trägereinheit 1 mit einer Mehrzahl an Profilelementen 2 mit einer Grundfläche 1a, siehe Fig. 2. Die Profilelemente 2 weisen eine wellenförmige Kontur 8 auf. Alle Materialschichten 3 sind hier durch Auftragsschweißen hergestellt. Die Konturen 8 der Profilelemente 2 sind hier spangebend nachbearbeitet und weisen daher eine glatte Oberfläche auf. Die Verschleißplattenvorrichtung 100 ist kostengünstig fertigbar, insbesondere auch bei großen Abmessungen. Vorteilhaft kann durch Auftragsschweißen auch eine die Trägereinheit 1 schützende Grundschicht 5 hergestellt werden.

Eine Höhe der Profilelemente 2 zur obersten Grundschicht 5 beträgt hier ca. 8 mm. Eine Höhe der Spitze der Profilelemente 2 zur Grundfläche 1a der Trägereinheit 1 beträgt ca. 12 mm. Die bearbeiteten Profilelemente 8 weisen an den Spitzen einen Radius von ca. 3 mm auf. Ein Abstand zwischen zwei Spitzen von Profilelementen 2 beträgt hier ca. 16 mm.

Fig. 2 zeigt eine schematische Schnittansicht der Verschleißplattenvorrichtung 100 nach dem Auftragsschweißen und vor der spangebenden Nachbearbeitung. Die Trägereinheit 1 ist hier als Blech aus einem Baustahl ausgebildet. Aufbauend auf der Grundfläche 1a sind hier insgesamt sieben Materialschichten 3 durch Auftragsschweißen aufgetragen. Die Materialschichten 3 sind dadurch stoffschlüssig und fest mit der Trägereinheit 1 und untereinander verbunden.

Drei Materialschichten 3 bilden Grundschichten 5, welche sich hier über die gesamte Grundfläche 1a der Trägereinheit 1 erstrecken. Die anderen vier Materialschichten 3 bilden die Profilelemente 2 mit deren Kontur 8. Hierfür weisen die Materialschichten 3 Unterbrechungen 7 auf, welche hier seitlich innerhalb der jeweiligen Materialschicht 3 rechts und links durch Abschnitte von Schweißraupenstrukturen 4 der Materialschicht 3 berandet sind.

Eine Materialschicht 3 ist hier aus Schweißraupenstrukturen 4, welche durch stoffschlüssig miteinander verbundene Schweißraupen 4 gebildet werden. In den Grundschichten 5 sind die Schweißraupenstrukturen 4 nicht separat dargestellt. In den Materialschichten 3, welche die Profilelemente 2 bilden, weisen die Schweißraupenstrukturen 4 verschiedene Breiten 17 auf. Mit steigendem Abstand von der Trägereinheit 1 nimmt die Breite 17 der Schweißraupenstrukturen 4 zur Bildung der wellenförmigen Kontur 9 der Profilelemente 2 ab.

Die Materialschichten 3 weisen jeweils eine Höhe 6 auf. Die Höhen 6 der Materialschichten 3 beziehungsweise der Schweißraupenstrukturen 4 der Materialschichten 3, welche eine Grundschicht 5 oder die Profilelemente 2 bilden, unterscheiden sich voneinander. Durch eine Variation der Höhe 6 der Materialschichten und der Breite 17 der Schweißraupenstrukturen 4 wird hier die Kontur 8 der Profilelemente 2 bestimmt. Weiter kann dadurch eine teilweise Überlagerung der Schweißraupenstrukturen eine strukturelle Festigkeit erzielt.

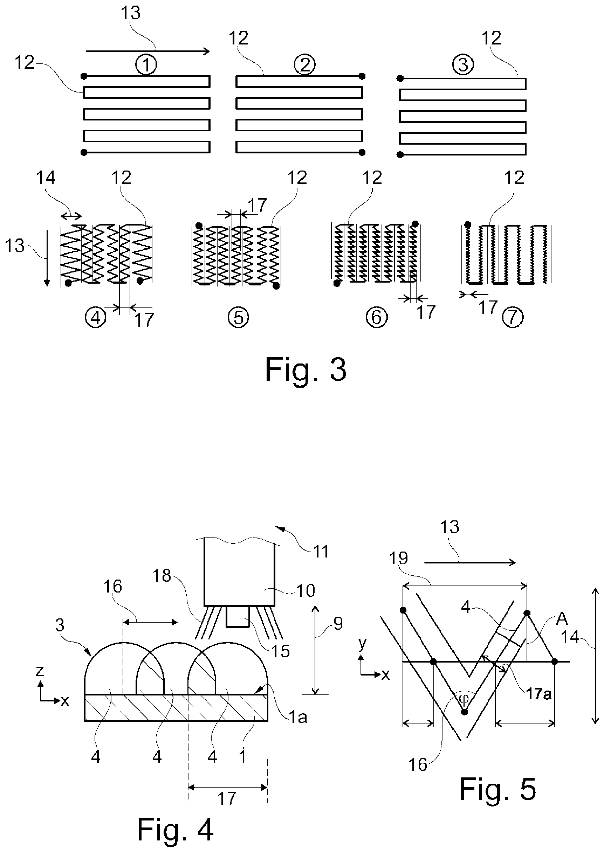

Fig. 3 zeigt schematische Skizzen von Schweißpfaden 12 zur Herstellung von Materialschichten 3 der Verschleißplattenvorrichtung 100, welche als Grundschichten 5 ausgebildet sind oder welche einen Teil eines Profilelements 2 und deren Kontur 8 bilden, vergleiche Nummerierung in Fig. 2.

Die ersten drei Grundschichten 5 werden jeweils durch bahnförmige Schweißpfade 12 hergestellt. Zwischen den einzelnen Materialschichten 3 sind die Anfangs- und Endpunkte zueinander versetzt. Die Materialschicht 3 kann eine oder mehrere Schweißraupenstrukturen 4 umfassen, welche sich hintereinander entlang des Schweißpfads 12 erstrecken.

Die Materialschichten 3, welche die Profilelemente 2 bilden, werden durch eine Überlagerung einer Linearbewegung 13 mit einer Pendelbewegung 14 des Schweißbrenners 10 hergestellt. Auch hier sind die Anfangs- und Endpunkte der Schweißpfade 12 zueinander versetzt. Weiter weisen die äußeren Schweißraupenstrukturen 4 in der vierten Materialschicht 3 eine größere Breite 17 auf als die benachbarten Schweißraupenstrukturen 3 in einem mittleren Bereich der vierten Materialschicht 3. Dadurch wird eine breite Stützbasis für die darüber liegenden Materialschichten 3 bereitzustellt. Die Breite 17 der Schweißraupenstruktur 4 nimmt mit zunehmendem Abstand der Materialschicht 3 von der Trägereinheit 1 ab, um die wellenförmige Kontur 8 der Profilelemente 2 zu bilden.

Fig. 4 zeigt eine schematische Detailansicht der Herstellung einer Grundschicht 5 der Verschleißplattenvorrichtung 100. Die Materialschicht 3 umfasst hier mehrere Schweißraupenstrukturen 4. Zur Erzeugung der Schweißraupenstruktur 4 wird ein Schweißbrenner 10 in einem Kontaktrohrabstand 9 von hier ca. 10 mm über die Trägereinheit 1 bewegt. Der Schweißbrenner 10 wird hier durch eine automatisierte Handhabungsvorrichtung 11 bewegt, wobei ein zugehöriger Schweißpfad 12 computergestützt erstellt wird.

Hier wird ein Metall-Schutz-Gas Schweißverfahren genutzt, um die Schweißraupenstrukturen 4 herzustellen. Es wird eine kontinuierlich nachgeförderte Drahtelektrode 15 aus einem Hartmetall genutzt, welche im Wesentlichen dem Werkstoff als S Z Fe3 gemäß DIN EN 14700 entspricht. Das Schutzgas 18 umschließt die Schweißzone während der Herstellung der Schweißraupenstruktur 4. Ein Versatz 16 des Schweißbrenners 10 zwischen zwei Schweißraupenstrukturen 4 ist hier so bemessen, dass die Schweißraupenstrukturen 4 sich in der resultierenden Breite 17 circa 20 % überlappen, um eine glatte und gleichmäßige Oberfläche der Materialschicht 3 zu erzeugen.

Fig. 5 zeigt eine schematische Detailskizze eines Schweißpfads 12 zur Fertigung einer Schweißraupe 4 mit einer variablen Breite 17 für eine Materialschicht 3, welche einen Teil der Kontur 8 eines Profilelements 2 der Verschleißplattenvorrichtung 100 bildet. Als Maß für den Abstand 16 wird hier der Winkel 16 beziehungsweise eine Wellenlänge 19 genutzt, um eine Überlappung zweier benachbarter Abschnitte der Schweißraupenstruktur 4 einzustellen. Der Winkel ergibt sich aus den Geschwindigkeiten der Linearbewegung 13 und der Pendelbewegung 14 zueinander. Die Pendelbewegung 14 wird weiter durch die Amplitude A charakterisiert, welche im Wesentlichen auch die Breite 17 der Schweißraupenstruktur 4 vorgibt. Die Amplitude A beträgt hier zwischen 12 mm in einer unteren Materialschicht 3 der Profilelemente 2 und 2,5 mm in der obersten Materialschicht 3 der Profilelemente 2 bei einer Schweißgeschwindigkeit zwischen 8 mm in den Grundschichten 5 und 40 mm in den Materialschichten 3, welche die Profilelemente 2 bilden. In Abhängigkeit dieser Parameter können Schweißraupenstrukturen 4 in verschiedenen Breiten 17 gefertigt werden. Die Breite 17a einer einzelnen Schweißraupe 4 ist hier deutlich kleiner als die Breite der resultierenden Schweißraupenstruktur 4.

Vor dem Auftragen der Materialschichten 3 wird die Trägereinheit 1 hier auf 250°C vorgewärmt. Dadurch resultieren weniger Eigenspannungen und eine homogene Gefügestruktur in der fertigen Verschleißplattenvorrichtung 100.

Nach dem Auftragen der Materialschichten 3 wird die Kontur 8 der Verschleißplattenvorrichtung 100 hier spangebend nachbearbeitet, um eine gute Maßhaltigkeit der Kontur 8 zu gewährleisten.

### Bezugszeichen:

- 1: Trägereinheit
- 1a: Grundfläche
- 2: Profilelement
- 3: Materialschicht
- 4: Schweißraupe, Schweißraupenstruktur
- 5: Grundschicht
- 6: Höhe der Materialschicht
- 7: Unterbrechung
- 8: Kontur des Profilselements
- 9: Kontaktrohrabstand
- 10: Schweißbrenner
- 11: Handhabungsvorrichtung
- 12: Schweißpfad
- 13: Linearbewegung
- 14: Pendelbewegung
- 15: Drahtelektrode
- 16: Versatz bzw. Winkel
- 17: Breite der Schweißraupenstruktur
- 17a: Breite der Schweißraupe
- 18: Schutzgas
- 19: Wellenlänge
- 100: Verschleißplattenvorrichtung
- A: Amplitude

## Patentansprüche

1. Verschleißplattenvorrichtung (100) für eine Recyclinganlage, wie eine Schrottpresse oder eine Schrottschere, umfassend eine Trägereinheit (1) aus einem Metall und einer Mehrzahl an stoffschlüssig mit der Trägereinheit (1) verbundenen Profilelementen (2) aus einem Hartmetall, **dadurch gekennzeichnet,**
**dass** die Profilelemente (2) jeweils durch eine Mehrzahl an übereinanderliegenden und stoffschlüssig miteinander verbundenen Materialschichten (3) gebildet werden.

2. Verschleißplattenvorrichtung (100) nach Anspruch 1, wobei die Materialschicht (3) durch wenigstens eine Schweißraupenstruktur (4) mit wenigstens einer Schweißraupe (4) gebildet wird.

3. Verschleißplattenvorrichtung (100) nach dem vorhergehenden Anspruch, wobei Schweißraupenstrukturen (4) mit unterschiedlichen Breiten (17) aufweisen.

4. Verschleißplattenvorrichtung (100) nach einem der vorhergehenden Ansprüche, wobei eine Höhe (6) wenigstens zweier Materialschichten (3) unterschiedlich zueinander ist.

5. Verschleißplattenvorrichtung (100) nach einem der vorhergehenden Ansprüche, wobei zwischen der Trägereinheit (1) und den Profilelementen (2) wenigstens eine Grundschicht (5) vorhanden ist, und wobei die Grundschicht (5) durch eine Materialschicht (3) gebildet wird, welche sich im Wesentlichen über eine gesamte Grundfläche (1a) der Trägereinheit (1) erstreckt.

6. Verfahren zur Herstellung eines Verschleißblechs (100) nach einem der vorhergehenden Ansprüche, **dadurch gekennzeichnet, dass** wenigstens die nachstehenden Verfahrensschritte umfasst sind:
- Bereitstellen einer Trägereinheit (1),
- Auftragen einer Mehrzahl an Materialschichten (3) aufbauend auf eine Grundfläche (1a) der Trägereinheit (1),
- wobei jede weitere Materialschicht (3) wenigstens bereichsweise auf eine zuvor aufgetragene Materialschicht (3) aufgetragen wird; und wobei die Materialschicht (3) eine feste und stoffschlüssige Verbindung mit der Trägereinheit (1) oder der zuvor aufgetragenen Materialschicht (3) eingeht;
- wobei wenigstens ein Teil der Materialschichten (3) wenigstens bereichsweise wenigstens eine Unterbrechung (7) aufweisen, um wenigstens einen Abschnitt einer Kontur (8) eines Profilelements (2) zu bilden.

7. Verfahren nach dem vorhergehenden Anspruch, wobei die einzelnen Materialschichten (3) durch Auftragsschweißen von Schweißraupenstrukturen (4) hergestellt werden.

8. Verfahren nach dem vorhergehenden Anspruch, wobei ein Schweißmaterial genutzt wird, welches im Wesentlichen dem Werkstoff als S Z Fe3 gemäß DIN EN 14700 entspricht.

9. Verfahren nach einem der beiden vorhergehenden Ansprüche, wobei ein Metall-Schutz-Gas Schweißverfahren genutzt wird.

10. Verfahren nach einem der drei vorhergehenden Ansprüche, wobei ein Schweißbrenner (10), durch eine automatisierte Handhabungsvorrichtung (11), wie einen Gelenkarmroboter, entlang eines vorbestimmten Schweißpfads (12), bewegt wird, um eine Materialschicht (3) herzustellen.

11. Verfahren nach dem vorhergehenden Anspruch, wobei wenigstens eine Schweißraupenstruktur (4), welche einen Teil des Profilelements (2) bildet, durch wenigstens einen Schweißpfad (12) hergestellt wird, welcher wenigstens eine Linearbewegung (13) umfasst.

12. Verfahren nach dem vorhergehenden Anspruch, wobei eine Pendelbewegung (14) überlagert wird.

13. Verfahren nach einem der drei vorhergehenden Ansprüche, wobei wenigstens eine Materialschicht (3) eine Grundschicht (5) bildet, welche eine Grundfläche (1a) der Trägereinheit (1) im Wesentlichen vollständig bedeckt, und wobei der Schweißpfad (12) zur Herstellung der Grundschicht (5) sich bahnförmig über die gesamte Grundfläche (1a) der Trägereinheit (1) erstreckt.

14. Verfahren nach einem der acht vorhergehenden Ansprüche, wobei die Trägereinheit (1) vor dem Auftragen der Materialschichten (3) auf eine Temperatur zwischen 100° C und 500 °C insbesondere ca. 250°C vorgewärmt wird.

15. Verfahren nach einem der neun vorhergehenden Ansprüche, wobei die Profilelemente (2) spangebend nachbearbeitet werden.
